# EUROPÄISCHE PATENTANMELDUNG

(11) **EP 2 653 210 A1**
(43) Veröffentlichungstag der Anmeldung: **23.10.2013**
(21) Anmeldenummer: 12164565.9
(22) Anmeldetag: 18.04.2012
(51) Int. Cl.: B01D 53/14, B01D 53/60, B01D 53/62, B01D 53/75

(54) **Verbrennungsanlage mit Rauchgaswascher und CO2-Abscheidung sowie Verfahren zu deren Betrieb**

(71) Anmelder: Siemens Aktiengesellschaft, 80333 München (DE)
(72) Erfinder: Fischer, Björn, 60318 Frankfurt a.M. (DE); Joh, Ralph, Dr., 63500 Seligenstadt (DE); Schneider, Rüdiger, Dr., 65817 Eppstein (DE); Wiese, Martin, 52076 Aachen (DE)

(57) **Zusammenfassung**

Es wird eine Verbrennungsanlage (1), insbesondere ein Kraftwerk, mit einem Rauchgaswäscher (3) und mit einer abströmseitig am Rauchgaswäscher (3) angeschlossenen Abscheidevorrichtung (2) für Kohlendioxid angegeben, wobei der Rauchgaswäscher (3) einen ersten Waschbehälter (15) mit einem Rauchgaseinlass (17) und mit einem Rauchgasauslass (18) und einen zweiten Waschbehälter (16) mit einem Rauchgaseinlass (19) und mit einem Rauchgasauslass (20) umfasst, wobei der Rauchgasauslass (18) des ersten Waschbehälters (15) mit dem Rauchgaseinlass (19) des zweiten Waschbehälters (16) verbunden ist, wobei der erste Waschbehälter (15) in einen Kühlmittelkreislauf (22) eingebunden ist, wobei der zweite Waschbehälter (16) in einen Laugenkreislauf (23) eingebunden ist, und wobei der Rauchgasauslass (20) des zweiten Waschbehälters (16) mit der Abscheidevorrichtung (2) verbunden ist. Weiter wird ein entsprechendes Verfahren zum Betrieb der Verbrennungsanlage (1) angegeben.

## Beschreibung

Die Erfindung betrifft eine Verbrennungsanlage und insbesondere ein Kraftwerk, wobei zu einer Behandlung des entstehenden Rauchgases ein Rauchgaswäscher und eine abströmseitig am Rauchgaswäscher angeschlossene Abscheidevorrichtung für Kohlendioxid vorgesehen sind. Die Erfindung betrifft weiter ein Verfahren zum Betrieb einer derartigen Verbrennungsanlage, insbesondere eines Kraftwerks, wobei das entstehende Rauchgas einer Rauchgaswäsche unterzogen und Kohlendioxid aus dem Rauchgas abgeschieden wird.

Insbesondere bei der Verbrennung eines fossilen Brennstoffs in einer Verbrennungsanlage, wie z.B. in einem fossilbefeuerten Kraftwerk zur Erzeugung elektrischer Energie, ist das entstehende Rauchgas in nicht unerheblichem Umfang mit Kohlendioxid befrachtet. Neben Kohlendioxid enthält ein derartiges Rauchgas weitere Verbrennungsprodukte wie z.B. die Gase Stickstoff, Schwefeloxide, Stickstoffoxide und Wasserdampf sowie Festkörperpartikel, Stäube und Ruß. Gewöhnlich wird das Rauchgas nach einer weitgehenden Abschaltung der Festkörperbestandteile in die Atmosphäre entlassen. Gegebenenfalls werden auch Stickoxide und/oder Schwefeloxide katalytisch oder nasschemisch abgetrennt. Als natürlicher Bestandteil der Erdatmosphäre wird jedoch Kohlendioxid üblicherweise mit in die Atmosphäre entlassen.

Die durch den Menschen verursachte Erhöhung des Anteils an Kohlendioxid in der Erdatmosphäre wird jedoch als Hauptursache für den als Klimawandel bezeichneten Anstieg der Erdoberflächentemperaturen verantwortlich gemacht. In der Atmosphäre befindliches Kohlendioxid behindert nämlich die Wärmeabstrahlung von der Erdoberfläche ins All, was allgemein als Treibhauseffekt bekannt ist.

Insofern werden bei bestehenden Kraftwerksanlagen geeignete Sekundärmaßnahmen diskutiert, um nach der Verbrennung das entstandene Kohlendioxid wieder aus dem Rauchgas zu entfernen. Als eine technische Möglichkeit wird hierzu das Rauchgas mit einer Waschlösung in Kontakt gebracht, die mit einem geeigneten Absorptionsmittel für Kohlendioxid versetzt ist. Am aussichtsreichsten scheinen derzeit aminhaltige Absorptionsmittel, wobei als Amine insbesondere Alkanolamine, aber auch komplexere sterisch gehinderte Amine mit großen Alkylgruppen, zyklische Amine, Aminosäuren oder Aminosäuresalze eingesetzt werden. Die eingesetzten Amine bilden mit Kohlendioxid entweder Carbamate, oder das Kohlendioxid reagiert in der Waschlösung indirekt zu Hydrogencarbonat und einem protonierten Amin.

Durch den Kontakt des Rauchgases mit der Waschlösung wird enthaltenes gasförmiges Kohlendioxid in der Waschlösung gelöst bzw. in chemischem Sinne absorbiert. Das von Kohlendioxid befreite Rauchgas wird in die Atmosphäre entlassen. Die mit Kohlendioxid befrachtete Waschlösung kann an eine andere Stelle verbracht werden, wo es durch eine thermische Behandlung unter Desorption des Kohlendioxids wieder regeneriert wird. Das abgeschiedene Kohlendioxid kann nun z. B. in mehreren Stufen verdichtet, gekühlt und verflüssigt werden. In flüssigem oder gefrorenem Zustand kann das Kohlendioxid dann einer Lagerung oder Verwertung zugeführt werden. Die regenerierte Waschlösung wird erneut zur Absorption von Kohlendioxid aus dem Rauchgas eingesetzt.

Unerwünschterweise werden in einer aminhaltigen Waschlösung neben Kohlendioxid auch andere saure Gase, insbesondere Stickoxide und/oder Schwefeloxide, absorbiert. Anders als Kohlendioxid bilden die weiteren Gase mit den aminhaltigen Absorptionsmitteln jedoch unter anderem temperaturbeständige Salze (engl.: "Heat Stable Salts" HSS), die in der Desorptionseinrichtung nicht mehr zurückgebildet werden können. Diese temperaturbeständigen Salze senken während des Betriebs durch die hierdurch bedingte Abnahme der Aminkonzentration sukzessive die Kapazität der Waschlösung zur Aufnahme von Kohlendioxid. Darüber hinaus begünstigen sie gegebenenfalls die Korrosion und verändern die Fließeigenschaften der Waschlösung negativ. Das Absorptionsmittel in der Waschlösung wird mit der Zeit verbraucht und muss ersetzt werden. Die temperaturbeständigen Salze müssen darüber hinaus abgetrennt und entsorgt werden. Die Betriebskosten für die Abscheidung von Kohlendioxid aus dem Rauchgas werden hierdurch nachteiligerweise erheblich erhöht.

Aufgabe der Erfindung ist es daher, eine Verbrennungsanlage mit einer Abscheidevorrichtung für Kohlendioxid sowie ein Verfahren zum Betrieb einer derartigen Verbrennungsanlage anzugeben, womit gegenüber dem Stand der Technik eine Verbesserung der Wirtschaftlichkeit ermöglicht ist.

Die auf eine Vorrichtung gerichtete Aufgabe wird erfindungsgemäß gelöst durch eine Verbrennungsanlage mit einem Rauchgaswäscher und mit einer abströmseitig am Rauchgaswäscher angeschlossenen Abscheidevorrichtung für Kohlendioxid, wobei der Rauchgaswäscher einen ersten Waschbehälter mit einem Rauchgaseinlass und mit einem Rauchgasauslass und einen zweiten Waschbehälter mit einem Rauchgaseinlass und mit einem Rauchgasauslass umfasst, wobei der Rauchgasauslass des ersten Waschbehälters mit dem Rauchgaseinlass des zweiten Waschbehälters verbunden ist, wobei der erste Waschbehälter in einen Kühlmittelkreislauf eingebunden ist, wobei der zweite Waschbehälter in einen Laugenkreislauf eingebunden ist, und wobei der Rauchgasauslass des zweiten Waschbehälters mit der Abscheidevorrichtung verbunden ist.

Dazu geht die Erfindung in einem ersten Schritt von der Überlegung aus, dass sich eine aminhaltige Waschlösung, wobei das Absorptionsmittel durch Bildung von temperaturbeständigen Salzen verbraucht bzw. desaktiviert wird, grundsätzlich durch einen Destillationsprozess wieder aufgereinigt werden könnte. Dabei werden leicht flüchtige Amine, wie beispielsweise als Absorptionsmittel eingesetzte Alkanolamine, wieder auskondensiert und abgezogen. Im Sumpf verbleiben die schwer flüchtigen Verunreinigungen, weitere Abbauprodukte und auch die temperaturbeständigen Salze, wie insbesondere Ammoniumsalze. Auf diese Weise wird zwar die Waschlösung wieder aufbereitet; zu Abbauprodukten und/oder zu temperaturbeständigen Salzen reagiertes Absorptionsmittel ist jedoch unwiderruflich verloren.

In einem zweiten Schritt geht die Erfindung von der Überlegung aus, dass es zur Vermeidung des Abbaus an Absorptionsmittel auch möglich wäre, dem Abscheideprozess für Kohlendioxid eine alkalische Rauchgaswäsche vorzuschalten, wobei saure Gase wie Stickoxide und/oder Schwefeloxide aus dem Rauchgas ausgewaschen und in gelöster Form zu einer weiteren Behandlung oder einer Entsorgung verfrachtet werden. Der unerwünschte Abbau eines aminhaltigen Absorptionsmittels durch eingebrachte saure Gase kann insofern vermieden werden. Durch die Rauchgaswäsche kann insbesondere auch die für eine nachgeschaltete Absorption von Kohlendioxid notwendige Abkühlung des Rauchgases vorgenommen werden.

In einem dritten Schritt erkennt die Erfindung jedoch, dass bei einer Rauchgaswäsche durch die Abkühlung des Rauchgases in großen Mengen zugleich der enthaltene Wasserdampf abgeschieden wird. Mit der alkalischen Lauge der Rauchgaswäsche wird insofern eine beträchtliche Menge an kondensiertem Wasser mit ausgebracht, das in einem Teilstrom aus dem Laugenkreislauf abgetrennt werden muss. Es muss beständig Lauge nachgeführt werden, um die für die Rauchgaswäsche erforderliche Konzentration einzuhalten. Dies alles führt zu einer unerwünschten Erhöhung der Kosten sowohl für die Anlage, die relativ groß dimensioniert werden muss, als auch für den Betrieb.

Die Erfindung erkennt schließlich in einem vierten Schritt, dass die Betriebskosten für die Rauchgaswäsche zur Abkühlung des Rauchgases und zur Abscheidung von sauren Gasen vor dem Abscheideprozess von Kohlendioxid verringert werden können, wenn die Rauchgaswäsche zweistufig durchgeführt wird. Ein erster Waschbehälter wird hierbei einem zweiten Waschbehälter vorgeschaltet. Der erste Waschbehälter ist in einen Kühlmittelkreislauf eingebunden. Der zweite Waschbehälter ist in einen Laugenkreislauf eingebunden. Über den Rauchgasauslass des zweiten Waschbehälters wird das aufbereitete Rauchgas der Abscheidevorrichtung zugeführt.

Im ersten Waschbehälter wird das Rauchgas mit dem Kühlmittel, insbesondere mit Wasser, in Kontakt gebracht und hierdurch abgekühlt. Im Rauchgas enthaltener Wasserdampf kondensiert und wird mit dem Kühlmittel, insbesondere Wasser, ausgeschieden. Lauge zu einer alkalischen Rauchgaswäsche wird nicht verbraucht. Das abgeschiedene Wasser aus dem ersten Waschbehälter kann beispielsweise in eine zusätzlich vorgeschaltete Rauchgasentschwefelungsanlage geführt werden.

Erst im zweiten Waschbehälter erfolgt die Kontaktierung des Rauchgases mit der Lauge. Da sich wegen der vorgeschalteten Abkühlung die Temperatur des Rauchgases am Rauchgaseinlass und am Rauchgasauslass des zweiten Waschbehälters nicht merklich unterscheidet, wird kaum noch Wasser auskondensieren. Die für die alkalische Rauchgaswäsche eingesetzte Lauge kann daher lange im Kreis gefahren werden. Der Einsatz an Lauge ist gegenüber der einstufigen Rauchgaswäsche deutlich verringert.

Bevorzugt ist in dem Kühlmittelkreislauf zur Abkühlung des Kühlmittels ein Wärmetauscher geschaltet. In den Kühlmittelkreislauf ist in einer weiter bevorzugten Ausgestaltung eine Abtrenneinrichtung zur Abtrennung eines Teilstroms eingeschaltet. Die Abtrenneinrichtung ist insbesondere derart ausgestaltet, dass der Volumen- oder Mengenstrom des Teilstroms eingestellt werden kann. Durch die Einstellung kann auf die durch Kondensation eingebrachte Wassermenge Bezug genommen werden. Der Hauptstrom verbleibt im Kühlmittelkreislauf und wird erneut dem ersten Waschbehälter zurückgeführt.

In entsprechender Ausführung ist vorteilhafterweise im Laugenkreislauf ein Wärmetauscher zur Abkühlung der Lauge eingeschaltet. Auch im Laugenkreislauf kann zur Abtrennung eines Teilstroms zweckmäßigerweise eine Abtrenneinrichtung vorgesehen sein. Da das Rauchgas im zweiten Waschbehälter keine oder nur eine unmerkliche weitere Abkühlung erfährt, wird der Volumenstrom des Teilstroms relativ gering sein. Die Lauge kann insofern sehr lange im Kreislauf durch den zweiten Waschbehälter geführt werden, ohne dass sich deren Konzentration verändert. Der zweite Waschbehälter kann zweckmäßigerweise in seiner Auslegung geringer dimensioniert sein als der erste Waschbehälter.

Bevorzugt ist zur Einstellung der Laugenkonzentration im Laugenkreislauf eine Zuführeinrichtung für ein alkalisches Waschmittel vorgesehen. Als Waschmittel kann beispielsweise Kalium- oder Natriumhydroxid eingebracht werden, wonach die Lauge dementsprechend eine Kalium- oder Natriumlauge ist.

Hinsichtlich des Verfahrens wird die eingangs gestellte Aufgabe erfindungsgemäß dadurch gelöst, dass entstehendes Rauchgas einer Verbrennungsanlage zunächst durch einen ersten Waschbehälter geleitet wird, worin es unter Abkühlung mit einem Kühlmittel kontaktiert wird, dass das abgekühlte Rauchgas danach durch einen zweiten Waschbehälter geleitet wird, worin es unter Auswaschung von sauren Gasen mit einer Lauge kontaktiert wird, und dass das gewaschene Rauchgas anschließend durch eine Abscheidevorrichtung geführt wird, worin unter Absorption von Kohlendioxid mit einem Absorptionsmittel kontaktiert wird.

Bevorzugt wird zur Ausscheidung der durch Kondensation im ersten Waschbehälter aus dem Rauchgas abgeschiedenen Wassermenge ein Teilstrom aus dem Kühlmittelkreislauf entnommen. Ebenso bevorzugt wird ein Teilstrom dem Laugenkreislauf abgezweigt.

Da die Lauge im Laugenkreislauf des zweiten Waschbehälters wegen der geringen abgeschiedenen Wassermenge sehr lange im Kreis gefahren werden kann, wird ein alkalisches Waschmittel bevorzugt hinsichtlich der im Rauchgas enthaltenen sauren Gase, insbesondere hinsichtlich der Stickoxide und der Schwefeloxide, überstöchiometrisch beigemengt. Bevorzugt wird die Konzentration so gewählt, dass im Rücklauf aus dem Waschbehälter der pH-Wert kleiner als der pKₛ-Wert von Kohlendioxid ist. Damit wird in der alkalischen Rauchgaswäsche eine Auswaschung von Kohlendioxid verhindert. Durch die hohe Konzentration an alkalischem Waschmittel wird eine hohe Abscheidequote der sauren Rauchgase aus dem Rauchgas erzielt. Da im zweiten Waschbehälter kaum Wasser aus dem Rauchgas abgeschieden wird, erfolgt kein Verlust an hochkonzentrierter Lauge.

Ein Ausführungsbeispiel der Erfindung wird anhand einer Zeichnung näher erläutert.

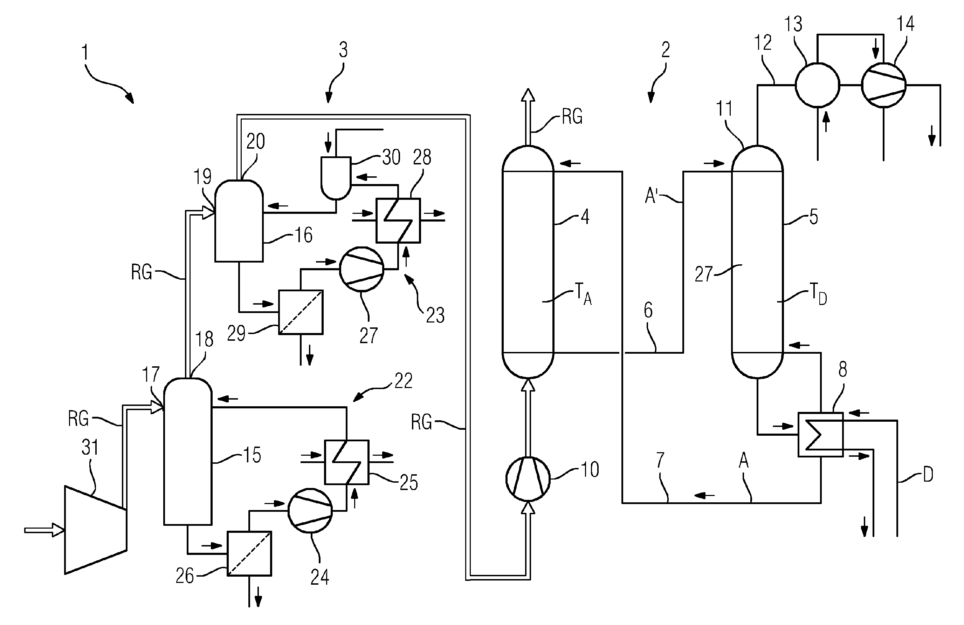

Dabei zeigt die einzige Figur in schematischer Darstellung eine Verbrennungsanlage mit einer Abscheidevorrichtung für Kohlendioxid und einem vorgeschalteten alkalischen Rauchgaswäscher.

In der Figur ist in einer schematischen Darstellung eine Verbrennungsanlage 1, vorliegend ein Fossilkraftwerk, mit einer Abscheidevorrichtung 2 zur Abscheidung von Kohlendioxid aus dem Rauchgas RG sowie mit einem vorgeschalteten alkalischen Rauchgaswäscher 3 dargestellt.

Durch den alkalischen Rauchgaswäscher werden aus dem Rauchgas RG zunächst saure Gase, insbesondere Stickoxide und/oder Schwefeloxide, ausgewaschen. Das ausgewaschene Rauchgas RG strömt dann in die Abscheidevorrichtung 2, wo Kohlendioxid durch den Kontakt mit einer aminhaltigen Waschlösung A durch Absorption aus dem Rauchgas RG abgeschieden wird. Das von Kohlendioxid weitgehend befreite Rauchgas RG wird danach in die Atmosphäre entlassen.

Da das Rauchgas RG in die Abscheidevorrichtung 1 ohne eine nennenswerte Last an sauren Gasen, insbesondere an Stickoxiden und/oder Schwefeloxiden, eintritt, ist die Ausbildung von temperaturbeständigen Salzen der sauren Gase mit dem aminhaltigen Absorptionsmittel der Waschlösung A deutlich reduziert. Folglich ist der Verbrauch an Waschlösung A sowie der Aufwand zur Regenerierung verbrauchter Waschlösung verringert.

Die Abscheidevorrichtung 2 umfasst eine Absorptionseinrichtung 4 sowie eine Desorptionseinrichtung 5, zwischen denen in Leitungen 6, 7 eine beladene Waschlösung A' bzw. eine regenerierte Waschlösung A zirkuliert. Über die Leitung 6 wird eine mit Kohlendioxid beladene Waschlösung A' aus der Absorptionseinrichtung 4 zur Regenerierung in die Desorptionseinrichtung 5 geführt. Über die Leitung 7 wird regenerierte Waschlösung A aus der Desorptionseinrichtung 5 erneut in die Absorptionseinrichtung 4 gebracht.

Der Desorptionseinrichtung 5 ist ein Reboiler zugeordnet, durch den im Betriebsfall ein Prozessdampf D der Verbrennungsanlage 1 zur Zuführung von Wärme geführt wird. Diese Wärme wird über eine Rezirkulation der Waschlösung A in die Desorptionseinrichtung 5 eingebracht, so dass darin befindliche Waschlösung A auf eine Desorptionstemperatur T_{d} erhitzt wird, so dass gelöstes Kohlendioxid thermisch desorbiert.

Im Betriebsfall wird das Rauchgas RG der Verbrennungsanlage 1 nach Durchlaufen des alkalischen Rauchgaswäschers 3, wo es abgekühlt wurde, über eine Fördereinrichtung 10 der Absorptionseinrichtung zugestellt. Dort wird das kühle Rauchgas RG in Gegenstrom mit regenerierter Waschlösung A in Kontakt gebracht, so dass enthaltenes Kohlendioxid absorbiert bzw. gelöst wird. Bei einer Absorptionstemperatur T_{A} weist die aminhaltige Waschlösung A eine hohe Beladungskapazität für Kohlendioxid auf. Das von Kohlendioxid befreite Rauchgas RG wird in die Atmosphäre entlassen.

Die mit Kohlendioxid beladene Waschlösung A' strömt zur Regenerierung in die Desorptionseinrichtung 5. Im Kopfbereich der Desorptionseinrichtung 5 wird über eine Gasleitung 12 kohlendioxidreiches Gas abgeleitet und über einen Wärmetauscher 13 sowie einen sich anschließenden Verdichter geführt. Mitgeführtes gasförmiges Kohlendioxid wird in dem Verdichter 14 verdichtet und für weitere Zwecke verwendet, z.B. in eine Aquifere injiziert oder in einen anderweitigen Kohlendioxidspeicher verfrachtet.

Der alkalische Rauchgaswäscher 3 umfasst einen ersten Waschbehälter 15 und einen nachgeschalteten zweiten Waschbehälter 16. Jeder der Waschbehälter 15, 16 umfasst einen Rauchgaseinlass 17 bzw. 19 sowie einen Rauchgasauslass 18 bzw. 20. Der erste Waschbehälter 15 ist in einen Kühlmittelkreislauf 22 eingebunden. Als Kühlmittel ist Wasser eingesetzt. Der zweite Waschbehälter 16 ist in einen Laugenkreislauf 23 eingebunden.

Im Kühlmittelkreislauf 22 sind eine Kühlmittelpumpe 24, ein Wärmetauscher 25 sowie eine Abtrenneinrichtung 26 angeordnet. Mittels der Kühlmittelpumpe 24 wird das Kühlmittel Wasser in den ersten Waschbehälter 15 gefördert. Dort wird es beispielsweise im Kopfbereich versprüht und mit durchströmendem Rauchgas RG in Kontakt gebracht. Das Kühlmittel Wasser sammelt sich gemeinsam mit auskondensiertem Wasser des Rauchgases RG am Boden des Waschbehälters 15, bevor es erneut in den Kühlmittelkreislauf 22 eingebracht wird. Über die Abtrenneinrichtung 26 wird aus dem im Kühlmittelkreislauf 22 befindlichen Hauptstrom ein Teilstrom abgetrennt. Dies ist notwendig um die durch Kondensation anfallenden hohen Wassermengen auszuschleusen. Über den Wärmetauscher 25 wird umlaufendem Kühlmittel beständig Wärme entzogen, so dass die Kühlung des Rauchgases RG im ersten Waschbehälter 15 aufrecht erhalten bleibt.

Das durch den Kontakt mit Wasser im ersten Waschbehälter 15 abgekühlte Rauchgas RG verlässt den ersten Waschbehälter 15 über den Rauchgasauslass 18 und strömt über den Rauchgaseinlass 19 in den zweiten Waschbehälter 16. Der zweite Waschbehälter 16 ist in einen Laugenkreislauf 23 eingebunden. Im Laugenkreislauf 23 sind eine Laugenpumpe 27, ein Wärmetauscher 28, eine Abtrenneinrichtung 29 sowie eine Zuführeinrichtung 30 für ein alkalisches Waschmittel angeordnet.

Mittels der Laugenpumpe 27 wird Lauge in den Kopfbereich des zweiten Waschbehälters 16 eingebracht und dort beispielsweise fein versprüht. Über den Kontakt der Lauge mit dem den zweiten Waschbehälter 16 durchströmenden Rauchgas RG werden diesem saure Gase, insbesondere Stickoxide und/oder Schwefeloxide, ausgewaschen und in gebundener Form über die Lauge abtransportiert. Über die Zuführeinrichtung 30 wird ein alkalisches Waschmittel, z. B. Kalium- oder Natriumhydroxid, einer wässrigen Lösung in hoher Konzentration beigegeben. Durch diese hinsichtlich der auszuwaschenden Gase überstöchiometrische Dosierung kann die Lauge lange im Laugenkreislauf 23 geführt werden. Es wird mittels der Abtrenneinrichtung 29 kein oder nur ein sehr geringer Teilstrom abgezogen. Da das dem zweiten Waschbehälter 16 durchströmende Rauchgas RG keinen Temperaturunterschied erfährt (es ist bereits abgekühlt), fällt durch Kondensation kein weiteres Wasser aus dem Rauchgas RG an. Der Laugenverlust und damit die Betriebskosten sind gering. Da keine großen Wassermengen zu führen bzw. auszuschleusen sind, ist der zweite Waschbehälter 16 deutlich geringer dimensioniert als der erste Waschbehälter 15. Über einen Wärmetauscher 28 kann die Temperatur der Lauge gesteuert werden.

Das von sauren Gasen weitgehend befreite Rauchgas RG verlässt den zweiten Waschbehälter 16 über dessen Rauchgasauslass 20 und gelangt in die Absorptionseinrichtung 4 der Abscheidevorrichtung für Kohlendioxid 2.

Aus den Wärmetauschern 25, 28 abgeführte Wärme kann insbesondere an andere Stellen der Verbrennungsanlage 1 verfrachtet werden. Beispielsweise wird Wärme an der Desorptionseinrichtung 5 benötigt.

Die vorliegende Verbrennungsanlage ist als ein Fossilkraftwerk ausgestaltet. Dieses ist insbesondere als ein Gasturbinenkraftwerk oder als eine GUD-Anlage, d.h. als ein kombiniertes Gas- und Dampfturbinenkraftwerk, ausgeführt. Das Rauchgas RG entstammt einer Gasturbine 31, die fossil befeuert ist.

## Patentansprüche

1. Verbrennungsanlage (1), insbesondere Kraftwerk, mit einem Rauchgaswäscher (3) und mit einer abströmseitig am Rauchgaswäscher (3) angeschlossenen Abscheidevorrichtung (2) für Kohlendioxid,
**dadurch gekennzeichnet, dass**
der Rauchgaswäscher (3) einen ersten Waschbehälter (15) mit einem Rauchgaseinlass (17) und mit einem Rauchgasauslass (18) und einen zweiten Waschbehälter (16) mit einem Rauchgaseinlass (19) und mit einem Rauchgasauslass (20) umfasst, wobei der Rauchgasauslass (18) des ersten Waschbehälters (15) mit dem Rauchgaseinlass (19) des zweiten Waschbehälters (16) verbunden ist, wobei der erste Waschbehälter (15) in einen Kühlmittelkreislauf (22) eingebunden ist, wobei der zweite Waschbehälter (16) in einen Laugenkreislauf (23) eingebunden ist, und wobei der Rauchgasauslass (20) des zweiten Waschbehälters (16) mit der Abscheidevorrichtung (2) verbunden ist.

2. Verbrennungsanlage (1) nach Anspruch 1,
**dadurch gekennzeichnet, dass**
in den Kühlmittelkreislauf (22) ein Wärmetauscher (25) zur Abkühlung des Kühlmittels geschaltet ist.

3. Verbrennungsanlage (1) nach Anspruch 1 oder 2,
**dadurch gekennzeichnet, dass**
in den Kühlmittelkreislauf (22) eine Abtrenneinrichtung (26) zur Abtrennung eines Teilstroms eingeschaltet ist.

4. Verbrennungsanlage (1) nach einem der vorhergehenden Ansprüche,
**dadurch gekennzeichnet, dass**
in den Laugenkreislauf (23) ein Wärmetauscher (28) zur Abkühlung der Lauge eingeschaltet ist.

5. Verbrennungsanlage (1) nach einem der vorhergehenden Ansprüche,
**dadurch gekennzeichnet, dass**
in den Laugenkreislauf (23) eine Abtrenneinrichtung (29) zur Abtrennung eines Teilstroms eingeschaltet ist.

6. Verbrennungsanlage (1) nach einem der vorhergehenden Ansprüche,
**dadurch gekennzeichnet, dass**
im Laugenkreislauf (23) eine Zuführeinrichtung (30) für ein alkalisches Waschmittel vorgesehen ist.

7. Verbrennungsanlage (1) nach einem der vorhergehenden Ansprüche,
**dadurch gekennzeichnet, dass**
der zweite Waschbehälter (16) kleiner dimensioniert ist als der erste Waschbehälter (15).

8. Verfahren zum Betrieb einer Verbrennungsanlage (1), insbesondere eines Kraftwerks, mit einer Rauchgaswäsche und mit einer Abscheidung von Kohlendioxid,
**dadurch gekennzeichnet, dass**
entstehendes Rauchgas (RG) zunächst durch einen ersten Waschbehälter (15) geleitet wird, worin es unter Abkühlung mit einem Kühlmittel kontaktiert wird, dass das abgekühlte Rauchgas (RG) danach durch einen zweiten Waschbehälter (16) geleitet wird, worin es unter Auswaschung von sauren Gasen mit einer Lauge kontaktiert wird, und dass das gewaschene Rauchgas (RG) anschließend durch eine Abscheidevorrichtung (2) geführt wird, worin es unter Absorption von Kohlendioxid mit einem Absorptionsmittel kontaktiert wird.

9. Verfahren nach Anspruch 8,
**dadurch gekennzeichnet, dass**
aus einem Kühlmittelkreislauf (22) ein Teilstrom entnommen wird.

10. Verfahren nach Anspruch 8 oder 9,
**dadurch gekennzeichnet, dass**
aus einem Laugenkreislauf (23) ein Teilstrom entnommen wird.

11. Verfahren nach einem der Ansprüche 8 bis 10,
**dadurch gekennzeichnet, dass**
der Lauge ein alkalisches Waschmittel überstöchiometrisch zur Auswaschung beigemengt wird.
